# EUROPEAN PATENT APPLICATION

(11) **EP 1 918 050 A2**
(43) Date of publication of application: **07.05.2008**
(21) Application number: 07019629.0
(22) Date of filing: 08.10.2007
(51) Int. Cl.: B23B 31/00, B23B 31/11

(54) **Holder for cutting tool**

(30) Priority: 30.10.2006 JP 2006293884
(71) Applicant: Mitsubishi Materials Corporation, Chioda-ku Tokyo (JP)
(72) Inventor: Yoshida, Takahiko, Joso-shi Ibaraki-ken (JP); Daiguji, Hisashi, Joso-shi Ibaraki-ken (JP); Hasegawa, Ken, Joso-shi Ibaraki-ken (JP); Hayashizaki, Hiroaki, Joso-shi Ibaraki-ken (JP); Ito, Masaaki, Sumida-ku Tokyo (JP)
(74) Representative: HOFFMANN EITLE

(57) **Abstract**

A high-rigidity axially compact arbor (20) for holding a cutter head (40) on a distal end side, including: an attachment portion (24) for attaching on a spindle, having a conical shape extending along the axis L; a gripping portion (21) extending outwardly of the outer periphery of the attachment portion (24); and a head holding portion (31) for detachably mounting the cutter head (40), the head holding portion (31) being positioned on the distal end side of the gripping portion (21), the head holding portion (31) having a mounting hole (28) extending along the axis L toward the base end side, and the mounting hole (28) having a female threaded portion (30) for threadedly connecting the cutter head (40), the female threaded portion (30) extending towards the base end side from the distal edge of the outer peripheral surface of the gripping portion (21).

## Description

### BACKGROUND OF THE INVENTION

### Field of the Invention

The present invention relates to a holder for cutting tool. More particularly, the present invention relates to an arbor for detachably attaching to a main spindle of a machine tool and holding a cutting insert, a method of joining the arbor and a cutter head, and a tool with an interchangeable cutter head including the arbor and a cutter head joined to the arbor.
Priority is claimed on Japanese Patent Application No. 2006-293884, filed October 30, 2006, the content of which is incorporated herein by reference.

### Description of Related Art

Conventionally, as disclosed in Patent Document 1, there has been proposed an arbor including: an attachment portion for attaching to a main spindle of a machine tool, which has an approximately cylindrical, multistage structure extending along the axis; a gripping portion to be gripped by an interchangeable arm of an ATC, which is positioned on the distal end side of the attachment portion and largely extends outwardly toward the outer peripheral side like a flange; and a cylindrical mounting portion protruding from the distal end surface of the gripping portion toward the distal end side.
Further, as disclosed in Patent Document 2, there has been proposed a tool with an interchangeable cutter head in which the cutter head is provided with a mounting shaft portion protruding toward the base end side, and the mounting shaft portion is threadedly connected to a mounting hole provided on the distal end of the shank portion, thereby joining the cutter head to the shank portion.
[Patent Document 1] Japanese Unexamined Patent Application, First Publication No. 2005-305618
[Patent Document 2] Japanese Unexamined Patent Application, First Publication No. 2005-14205

### SUMMARY OF THE INVENTION

Meanwhile, when it is attempted to form a mounting hole as disclosed in Patent Document 2 in the cylindrical mounting portion of the arbor as disclosed in Patent Document 1 to manufacture a tool with an interchangeable cutter head which can be applied to a machine tool provided with an ATC, the following problem arises. In such a case, it becomes necessary to form a female threaded portion for threadedly connecting the cutter head within the cylindrical mounting portion protruding from the gripping portion. As a result, it becomes necessary to provide a satisfactory length for forming the female threaded portion, and hence, it becomes difficult to shorten the length of the cylindrical mounting portion.
Further, in such a case, the cutter head disclosed in Patent Document 2 is mounted on the distal end of the cylindrical mounting portion. As a result, in the tool with an interchangeable cutter head, the distance from the distal edge of the outer peripheral surface of the gripping portion to the cutter head, in other words, the length of the protruding cutter head, becomes long.
Furthermore, since a female threaded portion is provided within the cylindrical mounting portion, the cutter head is held at a portion with a small thickness. As a result, the cutter head cannot be firmly held, and the rigidity of the mounting shaft portion itself is lowered.

The present invention takes the above circumstances into consideration, with objects of providing: an arbor having an improved rigidity, in which the distance from the distal edge of the outer peripheral surface of the gripping portion to the cutter head (i.e., the length of the protruding cutter head) can be shortened; a method of joining the arbor and a cutter head; and a tool with an interchangeable cutter head including the arbor and a cutter head joined to the arbor. '

For achieving the above-mentioned objects, the present invention provides an arbor for detachably attaching to a main spindle of a machine tool and holding a cutting insert, including: an attachment portion for attaching to the main spindle, the attachment portion having a cylindrical shape extending along the axis; a gripping portion positioned on the distal end side of the attachment portion and extending outwardly of the outer periphery of the attachment portion; and a head holding portion for detachably mounting the cutter head, which is positioned on the distal end side of the gripping portion, the head holding portion having a mounting hole extending along the axis toward the base end side, and the mounting hole having a female threaded portion for threadedly connecting the cutter head, the female threaded portion extending to the base end side of the distal edge of the outer peripheral surface of the gripping portion.

Further, the present invention provides a method of joining the above-mentioned arbor and a cutter head, the cutter head including a head body and a mounting shaft portion protruding from the base end surface of the head body toward the base end side, the mounting shaft portion being provided with a male threaded portion on the outer peripheral surface thereof, the method including: inserting the mounting shaft portion into the mounting hole of the arbor, and threadedly connecting the male threaded portion to the female threaded portion.

Furthermore, the present invention provides a tool with an interchangeable cutter head including the above-mentioned arbor and a cutter head joined to the arbor, the cutter head including a head body and a mounting shaft portion protruding from the base end surface of the head body toward the base end side, the mounting shaft portion being provided with a male threaded portion on the outer peripheral surface thereof, the mounting shaft portion being inserted into the mounting hole of the arbor, and the male threaded portion being threadedly connected to the female threaded portion.

According to the arbor, method of joining the arbor and a cutter head, and tool with an interchangeable cutter head including the arbor and a cutter head joined to the arbor as described above, a mounting hole extending along the axis toward the base end side is formed in the head holding portion, and a female threaded portion for threadedly connecting the cutter head is formed on the mounting hole to extend to the base end side of the distal edge of the outer peripheral surface of the gripping portion. As a result, the length of the protruding cutter head can be shortened, and the rigidity of the tool with an interchangeable cutter head can be improved.

Further, since a female threaded portion is provided in the gripping portion largely extending outwardly of the outer periphery, the cutter head is held at a portion with a large thickness. As a result, the cutter head can be firmly held, and the rigidity of the arbor can be improved.
Furthermore, the base end surface of the mounting shaft portion of the cutter head is positioned on the base end side of the distal edge of the outer peripheral surface of the gripping portion. As a result, by inserting the mounting shaft portion into the mounting hole provided in the gripping portion, the rigidity of the tool with an interchangeable cutter head can be further improved.
Since the rigidity is improved as described above, it becomes possible to perform a high feed-rate processing by increasing the feed rate of the tool with an interchangeable cutter head. As a result, an efficient processing can be performed.

The head holding portion may have a hollow mounting portion protruding from the distal end surface of the gripping portion toward the distal end side, in which the opening of the mounting hole is formed on the distal end surface of the hollow mounting portion, and the length H of the hollow mounting portion protruding from the distal edge of the outer peripheral surface of the gripping portion satisfies the relation: H ≤ 0.5 x D, wherein D is the outer diameter of the gripping portion.
When the head holding portion has such a hollow mounting portion, the hollow mounting portion is formed such that the length H of the hollow mounting portion protruding from the distal end surface of the gripping portion satisfies the relation: H ≤ 0.5 x D. As a result, the length of the protruding cutter head mounted on the distal end of the hollow mounting portion can be reliably shortened.

The opening of the mounting hole may be formed on the distal end surface of the gripping portion.
In such a case, no hollow mounting portion is provided. As a result, the length of the protruding cutter head can be shortened. Further, the shape of the arbor can be simplified, and hence, the arbor can be manufactured at a low cost.

The distal end surface of the gripping portion may be provided with a recessed seat recessing toward the base end side, and the opening of the hole may be formed on the bottom of the recessed seat.
When such a recessed seat is provided, not only is the mounting shaft portion of the cutter head inserted into the mounting hole, but also the base end portion of the head body can be fitted into the recessed seat. As a result, the length of the protruding cutter head can be further shortened. Moreover, by fitting the base end portion of the head body into the recessed seat, displacement of the cutter head can be prevented.

The distal end surface of the gripping portion may radially inwardly protrude to the distal end side in a sequential manner to exhibit a tapered shape.
When the distal end surface of the gripping portion has such a tapered shape, the thickness of the distal end of the arbor can be increased, and hence, the rigidity of the arbor can be improved.

Therefore, the present invention provides: an arbor having an improved rigidity, in which the distance from the distal edge of the outer peripheral surface of the gripping portion to the cutter head (i.e., the length of the protruding cutter head) can be shortened; a method of joining the arbor and a cutter head; and a tool with an interchangeable cutter head including the arbor and a cutter head joined to the arbor.

### BRIEF DESCRIPTION OF THE DRAWINGS

FIG. 1 is a perspective view of an arbor according to the first embodiment of the present invention.
FIG.2 is a cross-sectional view of the arbor shown in FIG. 1.
FIG. 3 is a partial cross-sectional side-view of a tool with an interchangeable cutter head including the arbor shown in FIG. 1.
FIG. 4 is an explanatory diagram of the tool with an interchangeable cutter head mounted on the main spindle of a machine tool.
FIG. 5 is a partial cross-sectional side-view of a tool with an interchangeable cutter head including an arbor according to the second embodiment of the present invention.
FIG. 6 is a partial cross-sectional side-view of a tool with an interchangeable cutter head including an arbor according to the third embodiment of the present invention.
FIG. 7 is a partial cross-sectional side-view of a tool with an interchangeable cutter head including an arbor according to the fourth embodiment of the present invention.
FIG. 8 is a partial cross-sectional side-view of a tool with an interchangeable cutter head including an arbor according to the fifth embodiment of the present invention.
FIG. 9 is a partial cross-sectional side-view of a tool with an interchangeable cutter head including an arbor according to another embodiment of the present invention.
FIG. 10 is a partial cross-sectional side-view of a tool with an interchangeable cutter head including an arbor according to still another embodiment of the present invention.

### REFERENCE NUMERALS

- 10: Tool with an interchangeable cutter head
- 20: Arbor
- 21: Gripping portion
- 21B: Distal end surface
- 21C: Outer peripheral surface
- 24: Attachment portion
- 27: Hollow mounting portion
- 28: Mounting hole
- 30: Female threaded portion
- 31: Head holding portion
- 32: Recessed seat
- 40: Cutter head
- 41: Head body
- 46: Mounting shaft portion
- 48: Male threaded portion

### PREFERRED EMBODIMETNS OF THE INVENTION

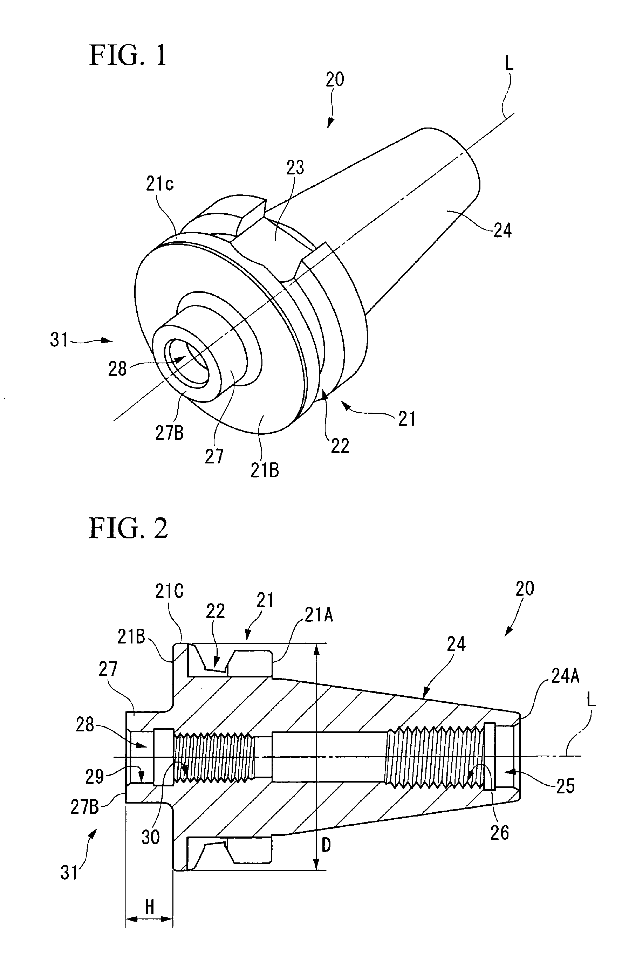

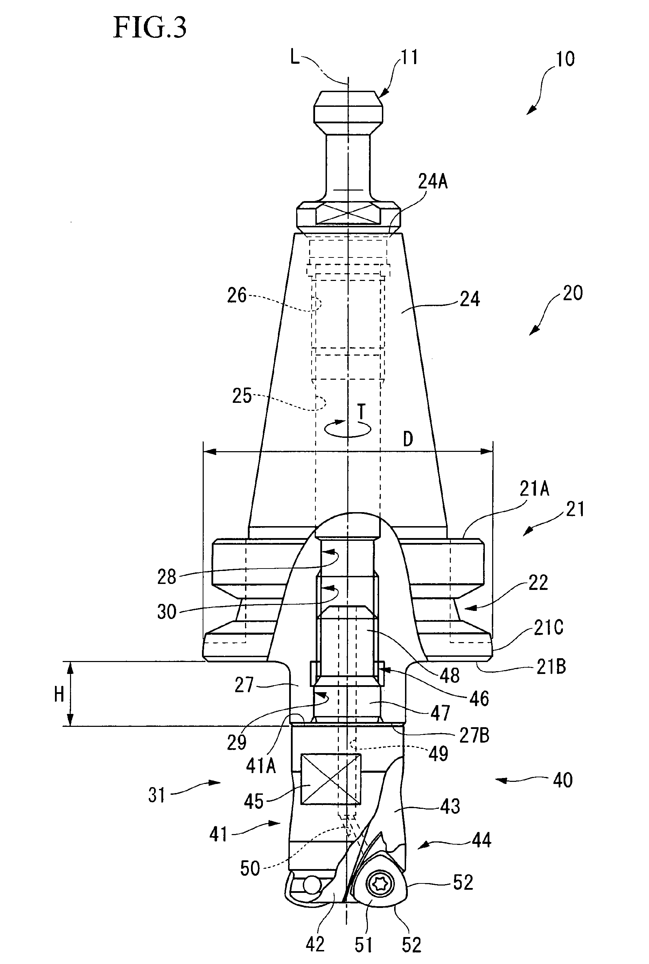

Hereinbelow, various embodiments of the present invention are described with reference to the attached drawings. FIG. 1 and FIG. 2 show an arbor according to one embodiment (first embodiment) of the present invention, and FIG. 3 shows a tool provided with an interchangeable cutter head.
The tool with an interchangeable cutter head 10 shown in FIG. 3 includes an arbor 20 attached to the main spindle of a machine tool M, and a cutter head 40 detachably mounted on the arbor 20.

As shown in FIG. 1, the arbor 20 has an approximately cylindrical, multistage structure extending along the axis L, and is provided with a gripping portion 21 extending radially outwardly of the axis L. At the center portion of the gripping portion 21 in the direction of the axis L, an annular groove 22 is formed which is a portion recessing from the outer peripheral surface radially inwardly. Further, on the base end side (upper-right side in FIG. 1., and right side in FIG. 2) of the annular groove 22 of the gripping portion 21, a pair of cut-out recess portions 23 are formed rotationally symmetrically at 180° around the axis L.

At the center portion of the distal end surface 21 A of the gripping portion 21, an attachment portion 24 for attaching to the main spindle of the machine tool M is provided to extend along the axis L toward the base end side. The attachment portion 24 has a tapered shape such that the radius sequentially decreases toward the base end side.
Further, as shown in FIG. 2, the attachment portion 24 has an attachment hole 25 formed which opens on the base end surface 24A of the attachment portion 24 and extends along the axis L. A part of the attachment hole 25 is formed as a threaded hole 26 for threadedly connecting a stud bolt 11 for attaching to the main spindle of the machine tool M.
The arbor 20 according to the present embodiment is applicable to a BT-type machine tool M, and the shapes and sizes of the gripping portion 21 and the attachment portion 24 are prescribed by a standard.

The distal end surface 21B of the gripping portion 21 extends in a direction perpendicular to the axis L, and a hollow mounting portion 27 is formed which protrudes along the axis L from the center portion of the distal end surface 21 B toward the distal end side. In the present embodiment, the hollow mounting portion 27 has a cylindrical shape with a constant outer diameter.
The length H of the hollow mounting portion 27 protruding from the distal edge (the distal end surface 21B in the present embodiment) of the outer peripheral 21C of the gripping portion 21 satisfies the relation: H ≤ 0.5 × D, wherein D is the outer diameter of the gripping portion 21. In the present embodiment, H = 0.217 × D.
Further, the ring-shaped distal end surface 27B of the hollow mounting portion 27 is a planar face perpendicular to the axis L, and is polished to have a smooth surface.

The hollow mounting portion 27 has a mounting hole 28 which is formed to extend along the axis L toward the base end side of the distal edge of the outer peripheral surface 21C of the gripping portion 21. As shown in FIG. 2, in the present embodiment, the mounting hole 28 is formed to extend to the tip of the attachment hole 25, and the mounting hole 28 communicates with the attachment hole 25.
On the distal end side of the mounting hole 28, a circular hole 29 is formed which opens on the distal end surface 27B of the hollow mounting portion 27 and extends toward the base end side with a constant inner diameter.

On the base end side of the circular hole 29 of the mounting hole 28, a female threaded portion 30 having a diameter smaller than the circular hole 29 is formed to extend to the base end side of the distal edge of the outer peripheral surface 21C of the gripping portion 21 via a stress-relieving recess having an inner diameter slightly larger than the circular hole 29. In the present embodiment, the positions of the distal end of the female threaded portion and the distal edge of the outer peripheral surface 21C of the gripping portion 21 are the same in the direction of the axis L. Further, the entire female threaded portion 30 is provided within the gripping portion 21, and the hollow mounting portion 27, the circular hole 29 of the mounting hole 28 and the female threaded portion 30 constitutes the head holding portion 31.

As shown in FIG. 3, the cutter head 40 is provided with an approximately cylindrical head body 41 having approximately the same diameter as the hollow mounting portion 27, and a mounting shaft portion 46 extending from the center portion of the base end surface 41A of the head body 41 toward the base end side.
The head body 41 is provided with a chip pocket 42 opening toward the distal end side and radially outwardly, a cutting discharge groove 43 sequentially twisting toward the rear side in the direction of tool rotation T moving from the chip pocket 42 to the base end side, and an attachment seat 44 formed in the wall on the rear side in the direction of tool rotation T of the chip pocket 42. In the present embodiment, each of the chip pocket 42, the cutting discharge groove 43 and the attachment seat 44 is provided in a pair arranged rotationally symmetrically at 180° around the axis L.

The attachment seat 44 has an insert 51 provided with a blade 52 detachably attached thereto. As shown in FIG. 3, in the present embodiment, the pair of the attachment seats 44 has the blades 52 of the inserts 51 detachably attached thereto in a manner such that the blades 52 face the distal end side of the cutter head 40 radially outwardly. Therefore, the cutter head 40 constitutes a two-fluted end mill.
Further, on the outer peripheral surface of the head body 41 between the pair of cutting discharge grooves 43, a chamfered part 45 is formed.

The base end surface 41A of the head body 41 is formed perpendicular to the axis L, and the mounting shaft portion 46 is provided on the center portion of the base end surface 41A to extend toward the base end side. On the head body 41 side, the mounting shaft portion 46 has a cylindrical portion 47 having an outer diameter sufficient for fitting into the circular hole 29. On the base end side of the cylindrical portion 47, a male thereaded portion 48 is formed which can be threadedly connected to the female threaded portion 30.
The cutter head 40 has a coolant suppliance hole 49 opening on the base end surface of the mounting shaft portion 46 and extending to the inner portion of the head body 41, and a discharge hole 50 extending from the coolant suppliance hole 49 to the attachment seat 44.

The arbor 20 and the cutter head 40 having the structure as described above are joined together in the manner as described below, to thereby constitute a tool with an interchangeable cutter head 10 shown in FIG. 3.
The mounting shaft portion 46 of the cutter head 40 is inserted into the mounting hole 28 of the arbor 20, the cylindrical portion 47 is fitted into the circular hole 29, and the male threaded portion 48 is threadedly connected to the female threaded portion 30. In this manner, the mounting shaft portion 46 is positioned on the base end side of the distal edge of the outer peripheral surface 21C of the gripping portion 21. Further, the base end surface 41A of the head body 41 and the distal end surface 27B of the hollow mounting portion 27 are closely contacted with each other, and the arbor 20 and the cutter head 40 are joined.

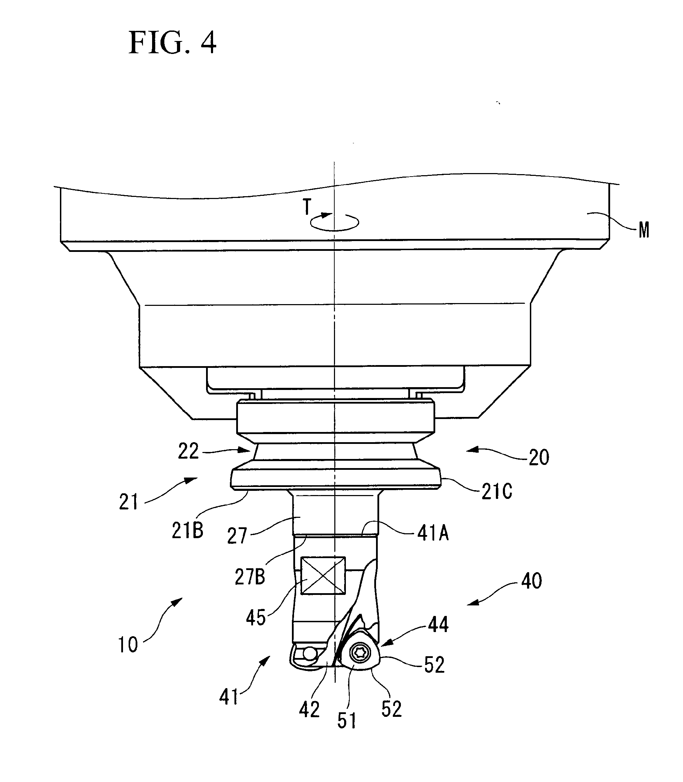

The tool with an interchangeable cutter head 10 has a stud bolt 11 threadedly connected to the attachment hole 25 provided on the base end side of the arbor 20. By the pulling operation of the main spindle of the machine tool M, as shown in FIG. 4, the outer peripheral surface of the attachment portion 24 is closely contacted with the tapered face of the inner circumferential hole of the main spindle, and the tool with an interchangeable cutter head 10 is attached to the main spindle. At this time, convex portions provided on the main spindle are fitted into the cut-out recess portions 23.

By rotating the main spindle, the tool with an interchangeable cutter head 10 is rotated around the axis L in the direction of tool rotation T, and by feeding the tool, a material to be cut is cut by the blades 52 of the cutting inserts 51 facing the distal end side of the cutter head radially outwardly. During the cutting process, a coolant is supplied from the machine tool M through the attachment hole 25 and the mounting hole 28, and is discharged toward the blades 52 via the coolant suppliance hole 49 opening on the base end surface of the mounting shaft portion 46 and the discharge hole 50.

In the tool with an interchangeable cutter head 10 having the configuration in which the arbor 20 and the cutter head 40 are joined together, the mounting hole 28 is formed in the hollow mounting portion 27 to extend along the axis L toward the base end side of the distal edge of the outer peripheral surface 21C of the gripping portion 21. Further, in the mounting hole 28, a female threaded portion 30 for threadedly connecting the mounting shaft portion 46 of the cutter head 40 is formed on the base end side portion of the distal edge of the outer peripheral surface 21C of the gripping portion 21. As a result, the cutter head 40 can be reliably joined even when the length of the protruding hollow mounting portion 27 is shortened. Therefore, the rigidity of the tool with an interchangeable cutter head 10 can be improved by shortening the length of the protruding cutter head 40.

Furthermore, as the female threaded portion is provided within the gripping portion 21 largely extending radially outwardly, the cutter head 40 can be held by joining the male threaded portion 48 with the portion having a large thickness. As a result, the cutter head 40 can be firmly held, thereby improving the rigidity of the mounted cutter head 40.
Still further, the base end surface of the mounting shaft portion 46 of the cutter head 40 is positioned on the base end side of the distal edge of the outer peripheral surface 21C of the gripping portion 21. By inserting the mounting shaft portion 46 into the mounting hole 29 extending to the gripping portion 21, the rigidity of the tool with an interchangeable cutter head 10 can be further improved.

Still further, when the head holding portion 31 has a hollow mounting portion 27 protruding from the distal end surface 21B of the gripping portion 21 toward the distal end side, the length H of the hollow mounting portion 27 protruding from the distal edge (distal end surface 21B) of the outer peripheral surface 21C of the gripping portion 21 satisfies the relation: H ≤ 0.5 × D, wherein D is the diameter of the gripping portion 21. In the present embodiment, H = 0.217 × D. Therefore, the length of the protruding cutter head 40 mounted on the distal end of the hollow mounting portion 27 can be shortened.
Still further, as the rigidity of the tool with an interchangeable cutter head 10 is satisfactorily improved, it becomes possible to increase the feed rate of the tool with an interchangeable cutter head 10 to perform a high feed rate processing, and hence, an efficient processing can be performed.

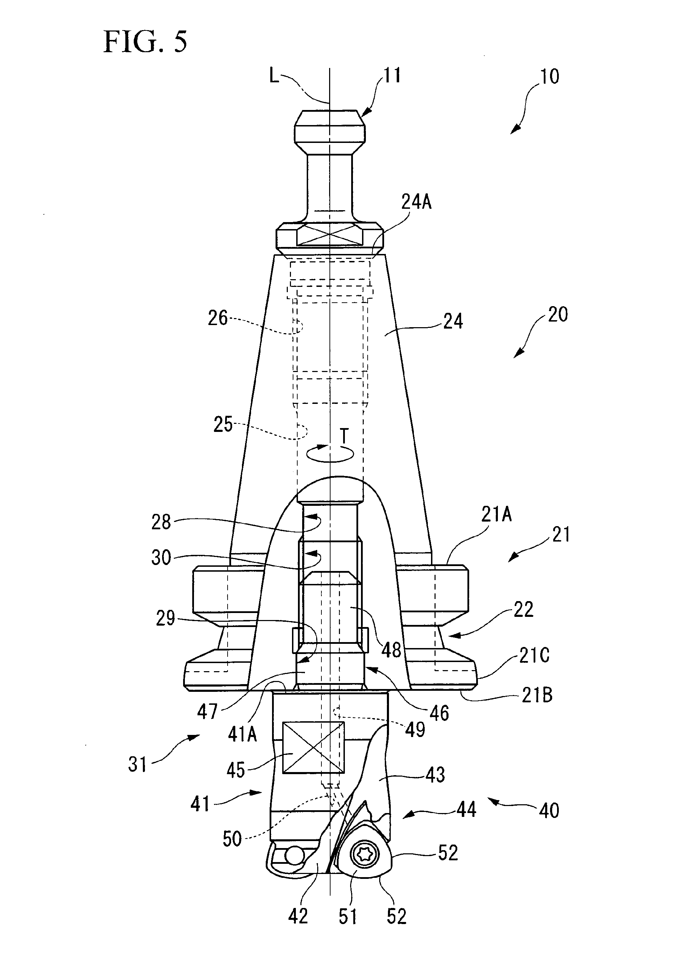

Next, explanation is given of an arbor 20 according to the second embodiment of the present invention. FIG. 5 shows a tool with an interchangeable cutter head 10 including an arbor 20 according to the second embodiment of the present invention. With respect to the constitutions which are the same as in the first embodiment, the same reference numerals are used, and explanations thereof are omitted.
In the present embodiment, no hollow mounting portion 27 is formed in the arbor 20. The entire distal end surface 2 1 B of the gripping portion 21 is a planar face perpendicular to the axis L, and a mounting hole 28 is formed to open at the center of the distal end surface 21B. That is, in the present embodiment, the length H of the hollow mounting portion 27 protruding from the distal edge of the outer peripheral surface 21C of the gripping portion 21 is 0. The distal end surface 21 B, the circular hole 29 of the mounting hole 28 and the female threaded portion 30 constitute the head holding portion 31.

In the tool with an interchangeable cutter head 10 including the arbor 20 having the structure as described above, the length of the protruding cutter head 40 can be further shortened, and the rigidity of the tool with an interchangeable cutter head 10 can be reliably improved. Further, the shape of the arbor 20 can be simplified, and hence, the arbor 20 can be manufactured at a low cost.

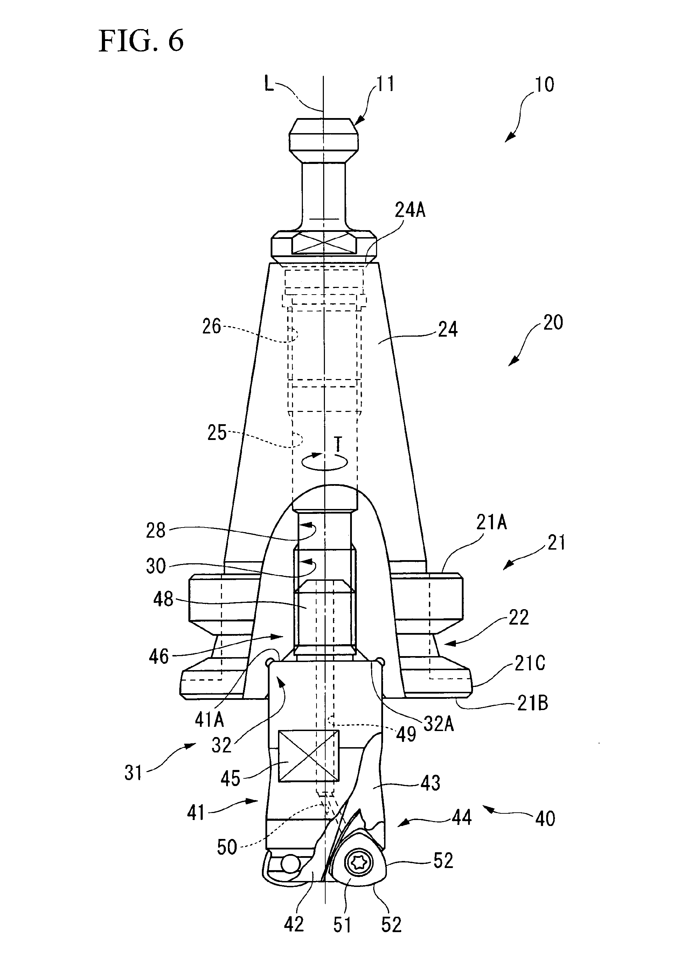

Next, explanation is given of an arbor 20 according to the third embodiment of the present invention. FIG. 6 shows a tool with an interchangeable cutter head 10 including an arbor 20 according to the third embodiment of the present invention. With respect to the constitutions which are the same as in the first and second embodiments, the same reference numerals are used, and explanations thereof are omitted.
In the present embodiment, the arbor 20 is provided with a recessed seat 32 recessing from the distal end surface 21B of the gripping portion 21 toward the base end side. In the bottom 32A of the recessed seat 32, a mounting hole 28 is formed. A cross-section of the recessed seat 32 perpendicular to the axis L is a circle centering around the axis L and having a diameter larger than the mounting hole 28, and the bottom 32A is perpendicular to the axis L. Further, no circular hole 29 is formed in the mounting hole 28, and the female threaded portion 30 is directly formed in the mounting hole 28. The recessed seat 32 and the female threaded portion 30 of the mounting hole 28 constitute the head holding portion 31.

The base end-side portion of the head body 41 of the cutter head 40 exhibits an external cylindrical shape which is fittable to the recessed seat 32. On the mounting shaft portion 46 extending from the base end surface of the head body 41, the male threaded portion 48 is formed without the cylindrical portion 47.

In the tool with an interchangeable cutter head 10 including the arbor 20 having the structure as described above, not only is the mounting shaft portion 46 of the cutter head 40 inserted into the mounting hole 28, but also the base end portion of the head body 41 is fitted into the recessed seat 32. As a result, the rigidity of the mounted cutter head 40 can be further improved. Further, by fitting the base end portion of the head body 41 into the recessed seat 32, displacement of the cutter head 40 can be reliably prevented.

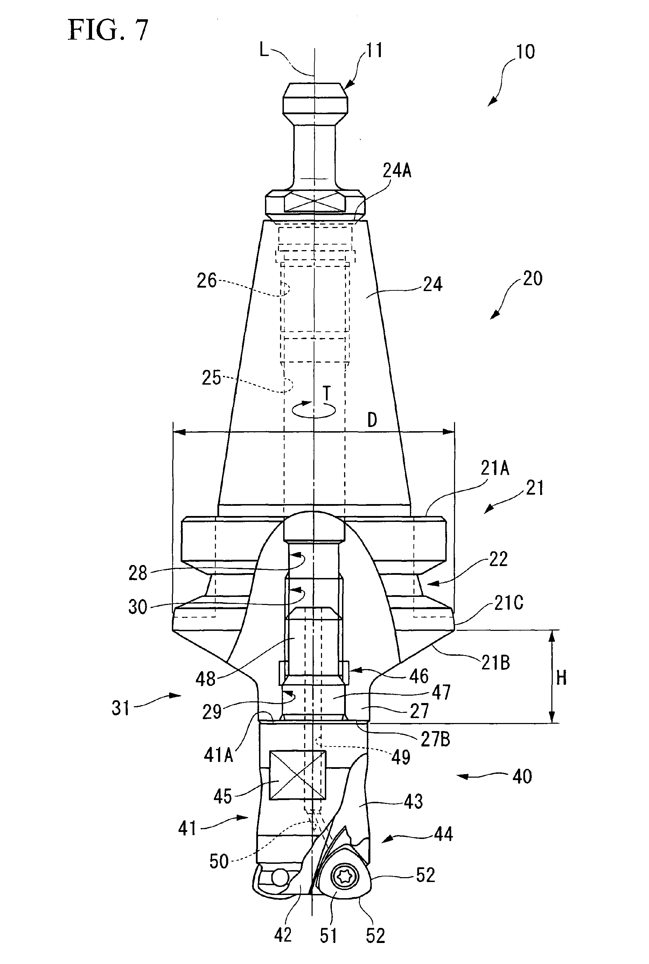

Next, explanation is given of an arbor 20 according to the fourth embodiment of the present invention. FIG. 7 shows a tool with an interchangeable cutter head 10 including an arbor 20 according to the third embodiment of the present invention. With respect to the constitutions which are the same as in the first to third embodiments, the same reference numerals are used, and explanations thereof are omitted.
In the arbor 20 according to the present embodiment, the distal end surface 21 A of the gripping portion 21 radially inwardly protrudes toward the distal end side in a sequential manner to exhibit a circular truncated cone which flattens in the direction along the axis L. Further, the hollow mounting portion 27 is provided to protrude from the center portion of the distal end surface 21 A toward the distal end side.
The tool with an interchangeable cutter head 10 including the arbor 20 having the structure as described above is advantageous in that the thickness of the distal end portion of the arbor 20 can be increased, and hence, the rigidity of the arbor 20 can be improved. Further, by holding the cutter head 40 with the portion having a large thickness, the cutter head 40 can be held more firmly.

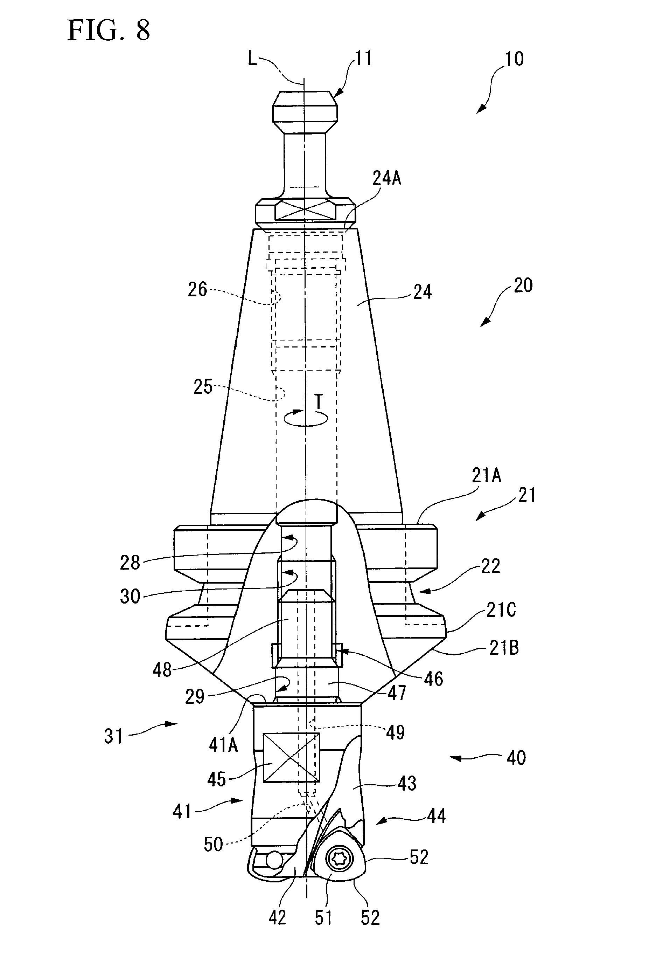

Next, explanation is given of an arbor 20 according to the fifth embodiment of the present invention. FIG. 8 shows a tool with an interchangeable cutter head 10 including an arbor 20 according to the third embodiment of the present invention. With respect to the constitutions which are the same as in the first to fourth embodiments, the same reference numerals are used, and explanations thereof are omitted.
In the arbor 20 according to the present embodiment, the distal end surface of the gripping portion 21 radially inwardly protrudes to the distal end side in a sequential manner to exhibit a tapered shape, and the mounting hole 28 is formed in the center portion of the distal end surface. The periphery of the opening of the mounting hole 28 is an annular plane perpendicular to the axis L.
The tool with an interchangeable cutter head 10 including the arbor 20 having the structure as described above is advantageous in that the thickness of the distal end portion of the arbor 20 can be increased, and hence, the rigidity of the arbor 20 can be improved. Further, the length of the protruding cutter head 40 can be shortened.

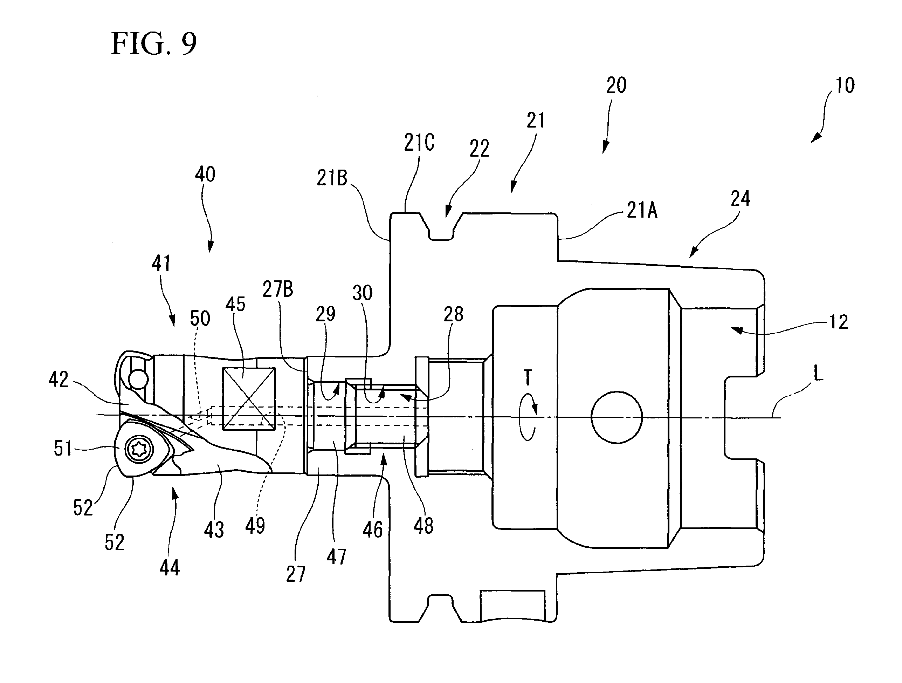

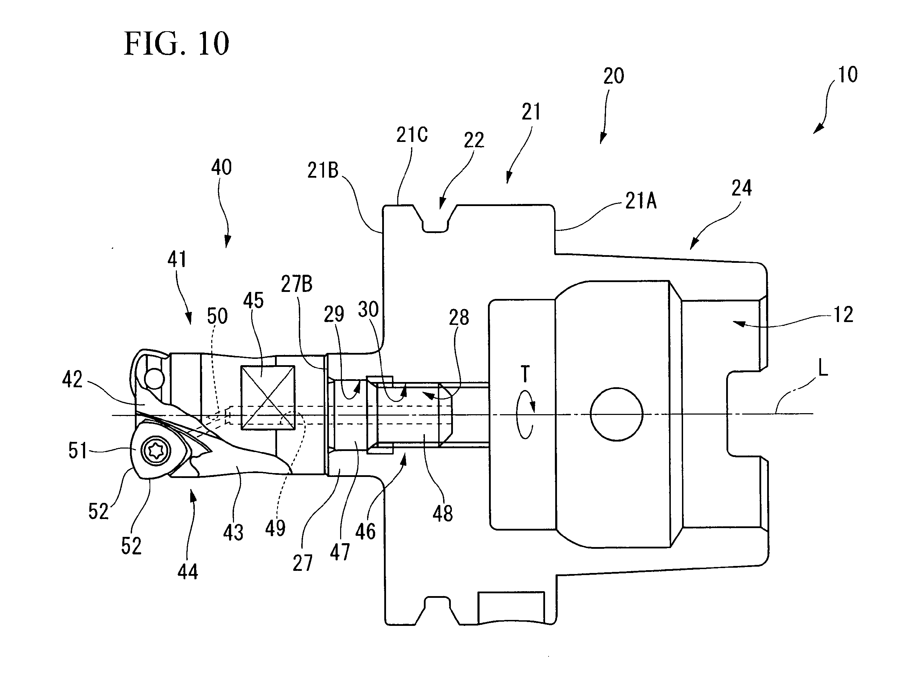

While preferred embodiments of the invention have been described and illustrated above, it should be understood that these are exemplary of the invention and are not to be considered as limiting. Any modifications can be made without departing from the spirit or scope of the present invention.
In the embodiments described above, the arbor 20 is a BT type in which the attachment portion 24 for detachably attaching to the main spindle of the machine tool M has a tapered shape. However, the arbor 20 is not particularly limited to the BT type. For example, as shown in FIG. 9 and FIG. 10, the arbor 20 may be a HSK type in which an adaptor hole 12 is formed in the attachment portion 24 for inserting an adaptor. Alternatively, the arbor 20 may be any other type.

Further, the shape of the hollow mounting portion is not limited to a cylindrical shape having a constant outer diameter. For example, the hollow mounting portion may have a diameter decreasing toward the distal end side to exhibit circular truncated cone shape. Alternatively, the hollow mounting portion may have curved side walls.
Furthermore, the shape of the distal end surface of the gripping portion is not particularly limited to the embodiments described above, as long as the mounting hole can be formed. For example, the gripping portion may have a multistage structure protruding toward the distal end side. Alternatively, the cross-section of the gripping portion taken along the axis may have a concave edge or a convex edge.

Still further, in the embodiments described above, the cutter head is a two-fluted end mill provided with two inserts. However, the cutter head is not limited to a two-fluted end mill, and the shape, configuration and number of the blades provided on the cutter head may be appropriately selected. Alternatively, the cutter head may have no inserts but have brazed blades.
Still further, the length of the blades of the inserts to be mounted on the cutter head may be increased in the direction of the axis. In the embodiments according to the present invention, the rigidity of the arbor is increased. As a result, the depth of cut of the blades can be increased, and hence, the blades of the inserts can be effectively used.

## Claims

1. An arbor for detachably attaching to a main spindle of a machine tool and holding a cutting insert, comprising:
an attachment portion for attaching to said main spindle, said attachment portion having a cylindrical shape extending along the axis;
a gripping portion positioned on the distal end side of said attachment portion and extending outwardly of the outer periphery of said attachment portion; and
a head holding portion for detachably mounting said cutter head, said head holding portion being positioned on the distal end side of said gripping portion,
said head holding portion having a mounting hole extending along the axis toward the base end side, and
said mounting hole having a female threaded portion for threadedly connecting said cutter head, said female threaded portion extending to the base end side of the distal edge of the outer peripheral surface of said gripping portion.

2. The arbor according to Claim 1, wherein said head holding portion has a hollow mounting portion protruding from the distal end surface of said gripping portion toward the distal end side,
the opening of said mounting hole is formed on the distal end surface of said hollow mounting portion, and
the length H of the hollow mounting portion protruding from the distal edge of the outer peripheral surface of said gripping portion satisfies the relation: H ≤ 0.5 x D, wherein D is the outer diameter of said gripping portion.

3. The arbor according to Claim 1, wherein the opening of said mounting hole is formed on the distal end surface of said gripping portion.

4. The arbor according to Claim 1, wherein the distal end surface of said gripping portion is provided with a recessed seat recessing toward the base end side, and the opening of said mounting hole is formed on the bottom of said recessed seat.

5. The arbor according to any one of Claims 1 to 4, wherein the distal end surface of said gripping portion radially inwardly protrudes to the distal end side in a sequential manner to exhibit a tapered shape.

6. A method of joining the arbor of any one of Claims 1 to 5 and a cutter head,
said cutter head comprising a head body and a mounting shaft portion protruding from the base end surface of said head body toward the base end side, said mounting shaft portion being provided with a male threaded portion on the outer peripheral surface thereof,
said method comprising:
inserting said mounting shaft portion into said mounting hole of said arbor, and
threadedly connecting said male threaded portion to said female threaded portion.

7. A tool with an interchangeable cutter head, comprising the arbor of any one of Claims 1 to 5 and a cutter head joined to said arbor,
said cutter head comprising a head body and a mounting shaft portion protruding from the base end surface of said head body toward the base end side, said mounting shaft portion being provided with a male threaded portion on the outer peripheral surface thereof,
said mounting shaft portion being inserted into said mounting hole of said arbor, and said male threaded portion being threadedly connected to said female threaded portion.

8. The tool with an interchangeable cutter head according to Claim 7, wherein the base end side of said mounting shaft portion of said cutter head is positioned on the base end side of the distal edge of the outer peripheral surface of said gripping portion.
